# EUROPÄISCHE PATENTANMELDUNG

(11) **EP 2 224 586 A1**
(43) Veröffentlichungstag der Anmeldung: **01.09.2010**
(21) Anmeldenummer: 09153739.9
(22) Anmeldetag: 26.02.2009
(51) Int. Cl.: H02P 3/12, H02P 3/16, H02P 3/22, H02P 3/26

(54) **Verfahren zur Steuerung eines motorbetriebenen Industrieroboters sowie Industrieroboter zur Durchführung eines derartigen Verfahrens**

(71) Anmelder: Carl Cloos Schweisstechnik GmbH, 35708 Haiger (DE)
(72) Erfinder: Friedrich, Frank, 35745 Herborn-Seelbach (DE); Petry, Stefan, 35767 Breitscheid (DE); Mader, Reiner, 35745 Herborn-Seelbach (DE); Platz, Johannes, Dr., 35708 Haiger (DE)
(74) Vertreter: Lippert, Stachow & Partner

(57) **Zusammenfassung**

Um den Betrieb eines Industrieroboters flexibler zu gestalten, wird ein Verfahren zur Steuerung eines motorbetriebenen Industrieroboters vorgeschlagen, welcher zumindest einen Antriebsmotor (50, 50') umfasst, der von einer an Netzspannung anschließbaren Versorgungsschaltung gespeist wird, welche zumindest eine mit der Netzspannung verbindbare Gleichrichterschaltung (20, 20'), eine Zwischenkreisschaltung mit zumindest einem Zwischenkreiskondensator (31), sowie eine ausgangsseitig an den Antriebsmotor angeschlossene Brückenschaltereinrichtung (40) umfasst, die eine Wechsel- oder Gleichstromversorgung für den Antriebsmotor bereitstellt, wobei die Versorgungsschaltung durch eine Steuereinrichtung (80) zum Beschleunigen und Abbremsen des Antriebsmotors gesteuert wird. Das erfindungsgemäße Verfahren zeichnet sich dadurch aus, dass ein elektrisches Abbremsen des Antriebsmotors die Schritte umfasst: Trennen der Zwischenkreisschaltung vom Netz; und Regeln der Zwischenkreisspannung (VZ) auf einen vorgegebenen Wert größer Null, wobei der Zwischenkreiskondensator in einem generatorischen Betrieb des Antriebsmotors (50, 50') gespeist wird. (Fig. 1)

## Beschreibung

Die Erfindung betrifft ein Verfahren zur Steuerung eines motorbetriebenen Industrieroboters nach dem Oberbegriff von Anspruch 1 sowie einen Industrieroboter nach dem Oberbegriff von Anspruch 12.

Ein derartiges Verfahren bzw. ein derartiger Industrieroboter ist beispielsweise in der internationalen Offenlegungsschrift WO 2007/131828 A1 beschrieben. Dabei umfasst der Industrieroboter zumindest einen Antriebsmotor, der von einer an Netzspannung anschließbaren Versorgungsschaltung gespeist wird. Diese Versorgungsschaltung umfasst zumindest eine mit der Netzspannung verbindbare Gleichrichterschaltung, eine Zwischenkreisschaltung mit zumindest einem Zwischenkreiskondensator sowie eine ausgangsseitig an den Antriebsmotor angeschlossene Brückenschaltereinrichtung, welche je nach Art des Antriebsmotors eine Wechsel- oder Gleichstromversorgung für den Antriebsmotor bereitstellt, wobei die Versorgungsschaltung durch eine Steuereinrichtung zum Beschleunigen und Abbremsen des Antriebsmotors gesteuert wird. Befindet sich der Industrieroboter im Servobetrieb, d.h. in einem Betrieb, bei welchem die Brückenschaltereinrichtung durch Ansteuern der jeweiligen Schalter die Stromversorgung für den Antriebsmotor bereitstellt, wird ein vorbestimmter Punkt im Raum von der Steuerung des Industrieroboters angefahren oder gehalten. Bei einem derartigen gattungsbildenden Industrieroboter wird oft insbesondere zu Zeitpunkten, bei welchen der Antriebsmotor über die Brückenschaltereinrichtung nicht gespeist wird, d.h. der Servobetrieb verlassen wurde, eine mechanische Bremse zugeschaltet, um eine ungewollte Beschleunigung der jeweiligen Roboterachse zu vermeiden, die in einer solchen Betriebssituation beispielsweise durch die Gravitationswirkung auf den Roboterarm bzw. die Last hervorgerufen wird.

Die WO 2007/131828 A1 lehrt dagegen auch, die im generativen Betrieb des Antriebsmotors in den Zwischenkreiskondensator zurück gespeiste Energie zu nutzen um durch entsprechendes Ansteuern der Schalter der Brückenschaltereinrichtung den Antriebsmotor elektrisch abzubremsen und erst danach die mechanische Bremse zuzuschalten, um eine erhöhte mechanische Belastung der Robotermechanik zu vermeiden.

Die Offenlegungsschrift DE 2387672 A betrifft die Steuerung des Abbremsens eines Roboterarms. Es wird gelehrt, mittels eines Positionsdetektors die Momentanlage des Roboterarms und deren zeitlichen Verlauf zu erfassen und darüber dessen Geschwindigkeit zu ermitteln. Eine in der Welle des Antriebsmotors angeordnete Bremse wird in einer Betriebsart so angesteuert, dass die Geschwindigkeit des Roboterarms auf einen konstanten Wert geregelt wird.

In bestimmten Betriebssituationen, insbesondere während der Einrichtung eines Industrieroboters zeigt sich, dass das herkömmliche Verfahren bzw. ein herkömmlicher Industrieroboter umständlich in der Handhabung ist. Beispielsweise sind im Einrichtungs- oder Lernmodus - u.U. manuell geführt- mit dem Roboterarm bestimmte Punkte im Raum anzufahren, wobei darauf geachtet werden muss, dass der Roboterarm nicht ungewollte oder über ein bestimmtes Maß hinaus beschleunigt wird, was ansonsten zu Beschädigungen an der Vorrichtung oder gar Verletzungen von Betriebspersonal führen kann.

Insofern liegt der Erfindung die Aufgabe zugrunde, die Steuerung eines motorbetriebenen Industrieroboters flexibler zu gestalten.

Diese Aufgabe wird auf überraschend einfache Weise verfahrensseitig schon durch ein Verfahren mit den Merkmalen von Anspruch 1 gelöst. Das erfindungsgemäße Verfahren zeichnet sich durch die Schritte zum elektrischen Abbremsen des Antriebsmotors aus:
a) Trennen der Zwischenkreisschaltung vom Netz und
b) Regeln der Zwischenkreisspannung auf einen vorgegebenen Wert > 0, wobei der Zwischenkreiskondensator in einem generatorischen Betrieb des Antriebsmotors gespeist wird.

Mit anderen Worten: Zum Abbremsen des Antriebsmotors in bestimmten Betriebssituationen wird zunächst die netzseitige Versorgung des Zwischenkreiskondensators abgeschaltet, d.h. die Zwischenkreisschaltung vom Netz getrennt, sodass der Zwischenkreiskondensator allein durch einen generatorischen Betrieb des Antriebsmotors gespeist wird. In diesem Fall wird durch die - beispielsweise gravitationsbedingte - Bewegung des Roboterarms im jeweiligen Antriebsmotor eine Spannung induziert, über die der Zwischenkreis aufgeladen wird. Der Ladestrom erzeugt ein Drehmoment des Antriebsmotors, welches der Bewegung des Roboterarms entgegen gerichtet ist, sodass dieser abgebremst wird. Durch das Regeln der am Zwischenkreiskondensator anliegenden Zwischenkreisspannung auf einen vorgegebenen Wert > 0 wird erreicht, dass das erzeugte Bremsmoment aufgrund einer starken Aufladung des Zwischenkreises nicht zu gering wird und gleichzeitig sichergestellt, dass das Bremsmoment nicht zu groß wird.

Das erfindungsgemäße Verfahren erlaubt es beispielsweise bei bestimmten Ausführungsformen einer Betriebsperson, den Roboterarm leicht manuell zu führen wobei gleichzeitig eine elektrische Bremsung der Bewegung bereitgestellt wird, die sehr genau auf die jeweiligen Bedürfnisse eingestellt werden kann. Vorteilhafterweise müssen bei der Umsetzung der erfindungsgemäßen Idee keine zusätzlichen Sensoren, wie Positionssensoren verwendet werden, allein das Messen der Zwischenkreisspannung reicht aus zur Umsetzung des erfindungsgemäßen Verfahrens. Es sei jedoch darauf hingewiesen, dass in bestimmten Ausführungsformen auch Positionsdetektoren verwendet werden können, beispielsweise um nach dem Erfassen des Überschreitens einer Geschwindigkeitsschwelle durch den Roboterarm bzw. einer Achse eine mechanische Abbremsung zu starten oder die Zwischenkreisspannung auf eine kleinere Spannung wie Null zu regeln, um eine stärkere Abbremsung des Roboterarms zu erzielen.

Das erfindungsgemäße Verfahren eignet sich insbesondere zur Durchführung der gerade beschriebenen Einrichtphase, in welcher der Roboterarm "per Hand" verschoben werden muss, wobei gleichzeitig sichergestellt ist, dass dieser schon allein durch die Einwirkung der Gravitation auf den Arm nicht zu stark beschleunigt. Höhere Geschwindigkeiten des Arms und damit die Gefahr einer Kollision des Arms mit in der Reichweite des Roboterarms befindlichen Gegenstände bzw. Personen kann stark reduziert werden. Je kleiner der Wert der Zwischenkreisspannung ist, auf die beim erfindungsgemäßen Verfahren geregelt wird, desto größer ist das erzeugte Bremsmoment beim generatorischen Betrieb des Antriebsmotors. Insofern lässt sich durch die Festlegung der vorgegebenen Zwischenkreisspannung, auf die geregelt wird, zumindest ein Parameter für die Erzeugung einer Mindestbremswirkung vorgeben.

Vorteilhafte Ausführungsformen der Erfindung sind in den Unteransprüchen angegeben.

Zweckmäßigerweise wird der Zwischenkreiskondensator nach dem Trennen der Zwischenkreisspannung vom Netz und vor dem Regeln der Zwischenkreisspannung auf eine auch vorgegebene Zwischenkreisspannung entladen. Je nach Ausführungsform kann diese vorgegebene Zwischenkreisspannung identisch mit der Spannung sein, auf welche die Zwischenkreisspannung danach geregelt wird, um im generatorischen Betrieb des Antriebsmotors die beschriebene Bremswirkung bereitzustellen. Durch die Entladung kann die bei einer Drehstromversorgung vorliegende Zwischenkreisspannung von etwa 540 Volt DC zumindest schnell in den Bereich der vorgegebenen Zwischenkreisspannung von beispielsweise einigen 10 Volt eingestellt werden, sodass dann schon nach kurzer Zeit die Regelung als Zwischenkreisspannung einsetzen kann. Ferner kann durch das Bereitstellen zweier Entladepfade für den Zwischenkreiskondensator, eine zum Entladen des Zwischenkreiskondensators in einen Bereich der zu regelnden Zwischenkreisspannung und einen Entladepfad zum Regeln der Zwischenkreisspannung auf den vorgegebenen Wert, die beiden Vorgänge durch Anpassung des jeweiligen Entladewiderstandes optimiert werden. Insbesondere kann hierdurch die Nennleistung des Regelwiderstandes und der Regelwiderstand selbst klein gehalten werden, wobei letzteres vorteilhaft zu einer kleinen Zeitkonstante der Entladung führt, wodurch die Regelung schneller erfolgt.

Zweckmäßigerweise können die während des Regelns der Zwischenkreisspannung auf einen vorgegebenen Wert die von der Brückenschaltereinrichtung umfassten Schalter gesperrt gehalten werden, sodass die Brückenschalter nicht angesteuert werden müssen. Um während des generatorischen Betriebs des Antriebs der gesperrten Brückenschalter den Zwischenkreis zu speisen, kann vorgesehen sein, dass jedem Brückenschalter eine Freilaufdiode parallel geschaltet ist. Insofern kann eine elektrische Bremsung einer Roboterachse ohne Ansteuern der Brückenschalter realisiert werden.

Zweckmäßigerweise kann zum Regeln der Zwischenkreisspannung auf einen vorgegebenen Wert dem Zwischenkreiskondensator ein Entladepfad parallel geschaltet sein, welcher zumindest eine Serienschaltung eines ansteuerbaren Schalters und eines Widerstandes umfasst, sodass die in dem Zwischenkreis zurückgespeiste Energie vernichtet werden kann. In einer weiteren Ausführungsform der Erfindung kann auch vorgesehen sein, dass die aus dem Zwischenkreis zur Abbremsung des Antriebs zu entnehmende Energie in das Versorgungsnetz zurückgespeist wird.

Besonders zweckmäßig ist es, wenn ein Entladepfad zum Entladen des Zwischenkreiskondensators, welcher zumindest eine Serienschaltung eines Schalters und eines Widerstandes umfasst, in Abhängigkeit der Netzspannung angesteuert wird. Auf diese Weise ist es insbesondere möglich, beim Auftreten und dem Feststellen eines Netzausfalls den Zwischenkreis zu entladen und somit eine Abbremsung des Roboterarms bereitzustellen, obwohl aufgrund des Netzausfalls keine Regelung der Zwischenkreisspannung auf den vorgegebenen Wert mehr durchgeführt werden kann.

Um sicherzustellen, dass nach dem Trennen der Zwischenkreisschaltung vom Netz aufgrund der dann im Zwischenkreis vorliegenden hohen Spannung eine unkontrollierte Beschleunigung des Roboterarms aufgrund Gravitationswirkung erfolgt, kann zweckmäßigerweise vorgesehen sein, dass eine mechanische Bremse aktiviert wird, bis eine vorgegebene Abbremsung des Antriebsmotors auf eine vorgegebene Drehzahl erreicht ist und/oder der Zwischenkreiskondensator auf eine vorgegebene Zwischenkreisspannung entladen wurde. Um zu vermeiden, dass nach dem Abschalten der Regelung der Zwischenkreisspannung auf einen vorgegebenen Wert > 0 eine unkontrollierte Betriebssituation entsteht, kann es vorteilhaft sein, eine mechanische Bremse vor dem Abschalten der Regelung zu aktivieren. Danach kann die Trennung der Zwischenkreisschaltung vom Netz aufgehoben werden, wodurch der Roboterarm nach dem Wiederaufladen des Zwischenkreiskondensators im normalen Servobetrieb, d.h. unter entsprechender Ansteuerung der Brückenschaltereinrichtung gehalten und geführt werden kann.

Herkömmlicherweise weisen Industrieroboter mehrere Achsen auf, wobei sechsachsige Industrieroboter häufig anzutreffen sind. Dem Fachmann ist leicht verständlich, dass sich das erfindungsgemäße Verfahren vorteilhaft auch auf mehrachsige Industrieroboter übertragen lässt, wobei in der Regel für jede Achse ein zugeordneter Antriebsmotor vorgesehen ist. Weist bei einem Roboter jeder Antriebsmotor eine von denen der anderen Antriebsmotoren getrennte Zwischenkreisschaltung auf, kann jede Achse durch die Festlegung und Regelung auf eine bestimmte Zwischenkreisspannung abgebremst werden, sodass die Bremseinstellung sehr genau auf die jeweilige Achse angepasst werden kann. Zweckmäßigerweise wird insofern einem Antriebsmotor einer Roboterachse eine eigene Versorgungsschaltung zugeordnet, welche unabhängig von anderen Versorgungsschaltungen für andere Antriebsmotoren bzw. -achsen zum elektrischen Abbremsen steuerbar ist. Hierdurch wird erreicht, dass letztlich die unterschiedlichen Antriebsachsen jeweils angepasst und damit optimiert wie beschrieben elektrisch abgebremst werden können.

Andererseits liegt es auch im Rahmen der Erfindung, eine einzelne Zwischenkreisschaltung für alle Antriebsmotoren vorzusehen, sodass danach auch alle Antriebsmotoren durch Regeln auf die gleiche vorgegebene Zwischenkreisspannung abgebremst werden, wobei beim generatorischen Betrieb aller Antriebsmotoren diese gemeinsam den Zwischenkreiskondensator speisen. Diese Ausführungsform zeichnet sich durch einen geringen Bauteilebedarf aus.

Zweckmäßigerweise wird zur Abgabe eines optischen und/oder akustischen Warnsignals eine Warneinrichtung eingeschaltet, wenn der Zwischenkreiskondensator in dem generatorischen Betrieb des Antriebsmotors gespeist wird und gleichzeitig die Zwischenkreisschaltung vom Netz getrennt ist, sodass ein Nutzer über die aktuelle Betriebssituation informiert ist. Dabei kann auch vorgesehen sein, dass ein Nutzer von der Warneinrichtung durch Abgabe eines besonderen optischen und/oder akustischen Warnsignals darüber informiert wird, wenn die Zwischenkreisspannung über den zu regelnden Wert steigt.

Vorrichtungsseitig wird die der Erfindung zugrunde liegende Aufgabe gelöst durch einen Industrieroboter, welcher zumindest einen Antriebsmotor umfasst, der von einer am Netzstrom anschließbaren Versorgungsschaltung gespeist ist, welche zumindest eine mit dem Netzstrom verbindbare Gleichrichterschaltung, eine Zwischenkreisschaltung mit zumindest einem Zwischenkreiskondensator sowie einer ausgangsseitig an den Antriebsmotor angeschlossene Brückenschaltereinrichtung umfasst, die eine Wechselstrom- oder eine Gleichstromversorgung für den Antriebsmotor bereitstellt, wobei die Versorgungsschaltung durch eine Steuereinrichtung zum Beschleunigen und Abbremsen des Antriebsmotors gesteuert ist. Der erfindungsgemäße Industrieroboter weist ein Mittel wie ein steuerbares Relais zum Trennen der Zwischenkreisschaltung vom Netz sowie ein Mittel zum Regeln der Zwischenkreisspannung auf einen vorgegebenen Wert > 0 auf,
wobei der Zwischenkreiskondensator in einem generatorischen Betrieb des Antriebsmotors aufladbar ist, sodass der Antriebsmotor elektrisch abbremsbar ist.

Die Erfindung wird im Folgenden durch das Beschreiben einiger Ausführungsformen und weiterer erfindungsrelevanter Merkmale unter Bezugnahme auf die beiliegenden Zeichnungen erläutert, wobei
- Figur 1: in einer Prinzipdarstellung eine Versorgungsschaltung zum Speisen eines einzelnen Antriebsmotors eines Industrieroboters,
- Figur 2: den zeitlichen Verlauf der Zwischenkreisspannung sowie von Steuersignalen bei der Durchführung des erfindungsgemäßen Verfahrens,
- Figur 3: ähnlich wie Figur 2 bei anderen Betriebsbedingungen den zeitlichen Verlauf der Zwischenkreisspannung sowie von Steuersignalen bei der Durchführung des erfindungsgemäßen Verfahrens,
- Figur 4: eine Ausführungsform einer Versorgungsschaltung zur Speisung zweier Antriebsmotoren eines Industrieroboters und
- Figur 5: eine weitere Ausführungsform einer Versorgungsschaltung zur Speisung zweier Antriebsmotoren eines Industrieroboters
zeigt.

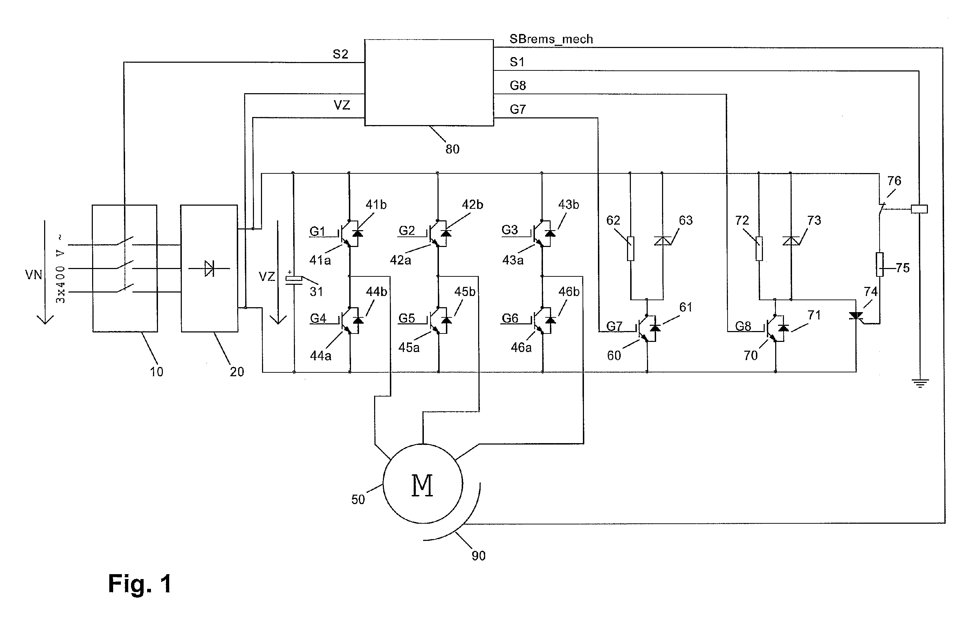

Figur 1 zeigt für einen erfindungsgemäß gestalteten Industrieroboter die Versorgungsschaltung bezüglich einer Roboterachse, die in dem beschriebenen Beispiel durch einen als Wechselstrommotor ausgebildeten Servomotor 50 angetrieben ist.
Dabei ist das Dreiphasennetz 3 x 400 Volt über einen dreiphasigen Schalter 10 an eine Gleichrichtereinrichtung 20 angeschlossen. Der dreiphasige Schalter kann je nach Ausführungsform ein Relais bzw. ein mechanischer oder elektrischer Schalter umfassen, in der in Figur 1 dargestellten Ausführungsform ist der Schalter elektrisch ansteuerbar. Dieser dreiphasige Schalter dient dazu, dass unten stehend noch zu beschreibende Leistungsteil der Versorgungseinrichtung vom Netz zu trennen.

Die Gleichrichtereinrichtung 20 arbeitet als Eingangsgleichrichter und wandelt die dreiphasige Wechselspannung in eine Gleichspannung um, welche durch den Zwischenkreisspannungskondensator 31 stabilisiert wird. Die Gleichrichtereinrichtung kann je nach Ausführungsform eine bekannte Schaltung zur Leistungsfaktorkorrektur umfassen. Im einfachsten Fall weist die Gleichrichtereinrichtung 20 eine sogenannte B6-Brücke auf.

Ausgangsseitig an die Zwischenkreisschaltung ist eine Brückenschaltereinrichtung angeschlossen, die in der dargestellten Ausführungsform sechs Leistungshalbleiterschalter 41a - 46a mit jeweils einer parallel geschalteten Freilaufdiode 41b - 46b aufweisen, wobei erstere als Brückenschalter geschaltet sind, die den als Dreiphasenwechselstrommotor ausgebildeten Servomotor 50 zur Bewegung des Roboterarms in Bezug auf eine vorgegebene Achse speisen.

Die Brückenschalter werden in bekannter Weise im Servobetrieb mittels der an das jeweilige Gate angelegten Steuersignale G1 - G6 zur Bereitstellung der Versorgung für den Motor 50 und damit zum Beschleunigen und Abbremsen desselben angesteuert.

Zur Umsetzung des erfindungsgemäßen Verfahrens ist ferner zumindest ein Entladepfad parallel zum Zwischenkreiskondensator 31 vorgesehen, in der in Figur 1 dargestellten Ausführungsform zwei Entladepfade, nämlich der erste umfassend den Halbleiterschalter 60, dem wiederum eine Freilaufdiode 61 parallel geschaltet ist, sowie den Widerstand 62, welchem eine Diode 63 parallel geschaltet ist. Der zweite Entladepfad, wiederum parallel zum Zwischenkreiskondensator 31 angeordnet, umfasst den Halbleiterschalter 70, wiederum mit einer Freilaufdiode 71 und den Widerstand 72, welchem auch eine Diode 73 parallel geschaltet ist. Parallel zum Schalter 70 ist ein weiterer Schalter 74 in Form eines Thyristors angeordnet, dessen Steuereingang über einen steuerbaren Schalter 76 mit dem Pluspol des Zwischenkreiskondensators 31 verbunden ist.

Die Steuereingänge der Schalter 10, 60, 70 und 76 sind mit zugeordneten Ausgängen einer Steuereinrichtung 80 verbunden, welche in Form eines Mikrocontrollers oder eines DSP (digitaler Signalprozessor) ausgebildet sein kann und in der beschriebenen Ausführungsform auch die Brückenschalter 41a - 46a ansteuert und damit als zentrale Steuereinrichtung arbeitet. Die Stromversorgung der Steuereinrichtung ist der Einfachheit halber nicht dargestellt, sie ist in den beschriebenen Ausführungsformen unabhängig vom Schaltzustand des dreiphasigen Schalters 10 sichergestellt.

Die Steuereinrichtung 80 weist zudem einen Sensoreingang mit nachgeschaltetem Analog/Digitalwandler auf zur Erfassung und Digitalisierung des Momentanwertes der Zwischenkreiskondensatorspannung VZ.

Der oben stehend schon kurz erläuterte Servobetrieb des Antriebsmotors, bei welchem die Brückenschalter 41a - 46a zum Öffnen und Schließen angesteuert werden, um den Antriebsmotor mit Wechselstrom zu speisen, ist dem Fachmann wohl bekannt, sodass darauf hier nicht weiter eingegangen werden muss. Ferner ist ein elektrisches Abbremsen des Antriebmotors durch entsprechendes Ansteuern der Brückenschalter im Servobetrieb bekannt.

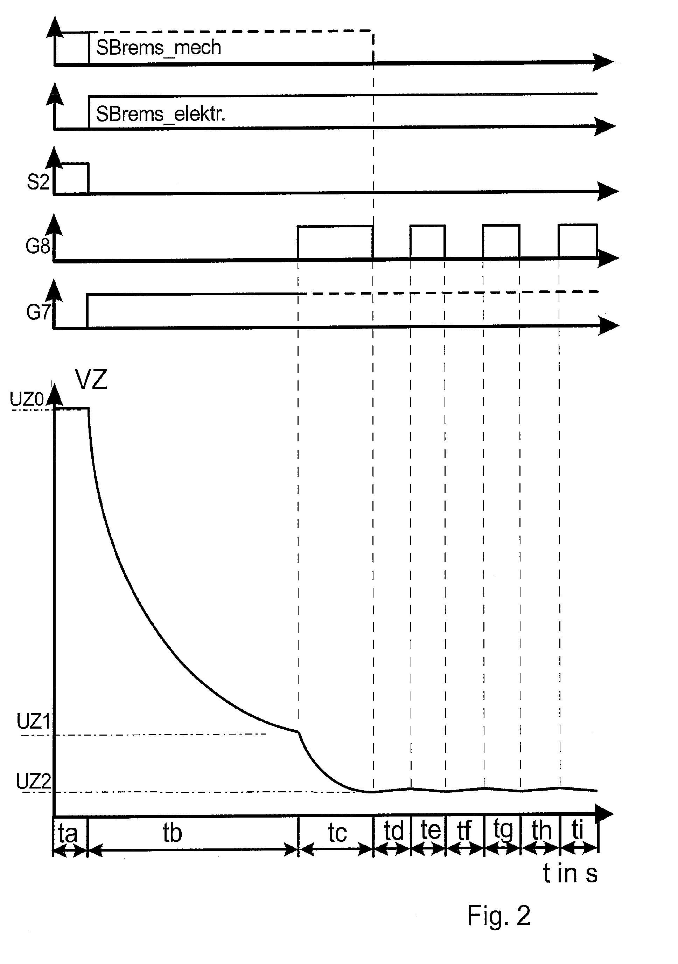

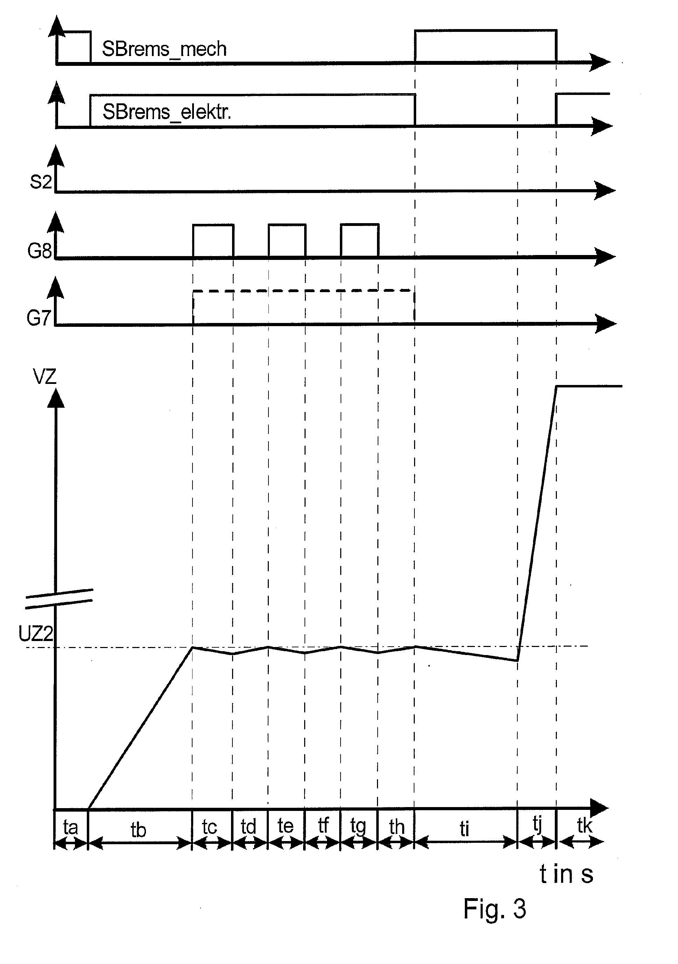

Demgegenüber soll im Folgenden das erfindungsgemäße Verfahren zum elektrischen Abbremsen des Antriebsmotors erläutert werden, das insbesondere in einer Einrichtungsbetriebsphase verwendet werden kann, bei welcher der Roboterarm, zunächst beschrieben für eine einzelne Achse, manuell bewegt, jedoch gleichzeitig elektrisch unter vorgegebenen Bedingungen abgebremst wird. Dieser Ablauf wird im Folgenden unter Bezugnahme auf die Figuren 2, 3 beschrieben, welche den zeitlichen Verlauf der Zwischenkreisspannung VZ sowie von verschiedenen, von der Steuereinrichtung 80 abgegebenen Steuersignalen zeigen.

In der zunächst beschriebenen Ausführungsform des erfindungsgemäßen Verfahrens wird von einem Betriebszustand ausgegangen, bei welchem alle Brückenschalter 41a - 46a zum Sperren angesteuert sind, ferner ist die mechanische Bremseinrichtung 90 über das Steuersignal SBrems_mech aktiviert, siehe Figur 2, oberster Graph, welcher die Aktivierung/Nichtaktivierung der Bremse 90 anzeigt sowie einen Zustand SBrems_elektr, siehe zweiter Graph von oben, welcher das Vorliegen einer elektrisch verursachten Bremsung des Abtriebs anzeigt.

Die am Zwischenkreiskondensator anliegende Zwischenkreisspannung VZ, siehe unterster Graph von Figur 2 liegt während des ersten Zeitintervalls ta auf einem konstanten Wert UZ0, welcher durch die Netzspeisung der Gleichrichtereinrichtung 20 verursacht ist. Mit Beginn des Intervalls tb schaltet das Steuersignal S2 auf Low, sodass der Dreiphasenschalter 10 die Zwischenkreisschaltung vom Netz trennt, die Zwischenkreisschaltung wird nicht mehr über die Gleichrichtereinrichtung gespeist. Mit Beginn des Zeitintervalls tb steuert die Steuereinrichtung 80 den Halbleiterschalter 60 über das Steuersignal G7 auf leitend, sodass der Entladepfad 62, 60 geschaltet ist zum Absenken der Zwischenkreisspannung innerhalb des Zeitintervalls tb auf den vorbestimmten Wert UZ1, der im vorliegenden Fall 80 Volt beträgt. Durch das Absenken der Zwischenkreisspannung VZ erhöht sich die Bremswirkung im generatorischen Betrieb des Antriebs 50, d.h. beispielsweise wenn der Antrieb manuell bewegt wird, da die durch die Bewegung induzierte Spannung im Motor 50 zu einem höheren Stromfluss in den Zwischenkreis hinein und damit zu einem höheren Bremsmoment führt.

In diesem generatorischen Betrieb wird der Zwischenkreiskondensator 31 vom Motor über die Freilaufdioden 41b - 46b gespeist. Der Entladepfad 62, 60 ist dabei für die Entladung des Zwischenkreiskondensators 31 von der Spannung UZ0 bis auf UZ1 optimiert. Nach dem Erreichen von UZ1, d.h. mit Beginn des Zeitintervalls tc wird in der beschriebenen Ausführungsform der zweite Entladepfad, umfassend den Widerstand 72 und den Schalter 70, zugeschaltet und dann die Zwischenkreisspannung durch Ansteuern des Schalters 70 auf die Sollspannung UZ2 gesteuert, die in Figur 2 am Ende des Zeitintervalls tc erreicht ist. Durch die Festlegung der vorgegebenen Zwischenkreisspannung UZ2, auf die geregelt wird, wird letztlich eine Mindestbremswirkung beim elektrischen Abbremsen der betreffenden Roboterachse vorgeben.

In der beschriebenen Ausführungsform ist eine Zweipunktregelung zur Beibehaltung der Zwischenkreisspannung UZ2 umgesetzt, siehe den zeitlichen Verlauf des Steuersignals G8 in Figur 2. Die nachfolgenden Zeitintervalle td - ti werden durch den zeitlichen Verlauf des Ansteuersignals G8 des Regelschalters 70 festgelegt, wobei die Steuereinrichtung 80 den Istwert UZ mit dem Sollwert UZ2 vergleicht und im Ansprechen auf die Differenz die Regelung vornimmt.

In einer nicht dargestellten Ausführungsform wird von der Steuereinrichtung 80 statt einer Zweipunktregelung, eine PID-Regelung zum Einstellen der vorgegebenen Zwischenkreisspannung UZ2 durchgeführt, auch andere Regelverfahren sind einsetzbar.

Wie aus Figur 2 ersichtlich, folgt die Regelung der Zwischenkreisspannung auf den vorgegebenen Wert UZ2 mit Beginn des Zeitintervalls tc. Gleichzeitig wird der Entladekreis 62, 60 abgeschaltet, welcher allein zum Entladen des Zwischenkreises von der Spannung UZ0 auf die vorgegebene Zwischenkreisspannung UZ1 eingeschaltet wird. Beide Entladekreise sind vorliegend für die jeweilige Funktion, d.h. für das Entladen des Kreises, ausgehend von UZ0 bis UZ1 bzw. das Regeln der Spannung auf den vorgegebenen Wert UZ2 optimiert. In einer nicht dargestellten Ausführungsform können beide Funktionen durch einen einzelnen Entladepfad bereitgestellt werden, sodass dann einer der beiden Schalter 60/70 entfallen kann. Darüber hinaus ist es auch möglich, dass der in Figur 1 dargestellte Entladepfad 62, 60 während der Regelung der Zwischenkreisspannung auf den Wert UZ2 durchgeschaltet ist, wenn der Widerstand 62 sehr viel größer als der Widerstand 72 ist.

In dem beschriebenen Beispiel liegt die einzuregelnde Sollspannung UZ2 bei 30 Volt und ist für die jeweilige Achse optimiert einstellbar, beispielsweise mittels eines Potentiometers oder eines Codierschalters. Je geringer diese vorgegebene Zwischenkreisspannung ist, desto größer ist der durch die Bewegung des Roboterarms erzeugte Stromfluss und das hierdurch erzeugte Bremsmoment des im generativen Betrieb arbeitenden Antriebs 50.

Bei dem in Figur 2 dargestellten Ablauf kann die mechanische Bremse nach dem Zeitintervall ta abgeschaltet sein, je nach Ausführungsform kann es jedoch auch vorteilhaft sein, die mechanische Bremse bis zum Erreichen der vorgegebenen Zwischenkreisspannung UZ2 eingeschaltet zu belassen, was durch die gestrichelte Linie im obersten Zeitgraph angedeutet ist.

Um einen unkontrollierten Zustand bei Netzausfall zu vermeiden, kann vorgesehen sein, dass nach dem Erkennen eines Netzausfalls ein Zwangsentladepfad für den Zwischenkreis geschaltet wird, siehe Figur 1. In der dort beschriebenen Ausführungsform ist ein parallel zum Schalter 70 angeordneter Thyristor 74 vorgesehen, welcher beim Unterschreiten einer vorgegebenen Schwelle der Spannungsversorgung der Steuereinrichtung bzw. der Treiberstufe der Halbleiterschalter G7/G8 leitend, d.h. gezündet wird wird. Stellt sich beispielsweise eine Spannungsunterversorgung der Steuereinrichtung 80 ein, wird das Ansteuersignal S1 für das Relais 76 abgeschaltet, sodass das Relais abfällt und der Kontakt des Relais geschlossen wird. Hierdurch zündet der Thyristor 74, sodass der Entladepfad, welcher den Thyristor 74 und den Widerstand 72 umfasst, geschlossen wird. Insofern ist das Relais 76 als Öffner ausgebildet, welches beim Anliegen eines Steuersignals S1 öffnet, ansonsten ist der Relaiskontakt geschlossen. Beim Auftreten eines Netzausfalls und damit einer Unterversorgung der Steuereinrichtung wird damit ein permanenter, den Widerstand 72 und den Thyristor 74 enthaltender Entladepfad geschaltet, sodass trotz der Speisung des Zwischenkreises durch den im generativen Betrieb arbeitenden Antrieb keine unerwünscht hohen Zwischenkreisspannungen am Kondensator 31 erzeugt werden können, welche ansonsten eine verminderte elektrische Bremswirkung zur Folge hätten.

Figur 3 zeigt eine weitere Betriebssituation, bei welcher das erfindungsgemäße Verfahren zum elektrischen Abbremsen des Antriebsmotors Anwendung findet. Wiederum ist die Zwischenkreisschaltung über den Dreiphasenschalter 10 vom Netz getrennt und anfangs die Bremse 90 aktiviert, was durch das Steuersignal SBrems_mech im Intervall ta angezeigt wird. Der Zwischenkreis ist in der angegebenen Betriebsphase bereits entladen, d.h. die Zwischenkreisspannung VZ beträgt 0 Volt. Im Zeitintervall tb wird der Roboterarm manuell bewegt oder bewegt sich aufgrund der auf ihn wirkenden Gravitationskraft, sodass der Achsmotor 50 als Generator wirkt und in den Zwischenkreis zurückspeist, sodass die Zwischenkreisspannung VZ steigt. Zu Beginn der Speisung ist das Bremsmoment hoch, da die Zwischenkreisspannung Null Volt beträgt. Nach Erreichen der vorgegebenen Zwischenkreisspannung UZ2, hier 30 V, startet die von der Steuereinrichtung 80 durchgeführte Regelung durch Ansteuerung des Schalters 70 mittels des Steuersignals G8 zum Öffnen und Schließen des Entladepfades 72, 70, siehe den Zeitverlauf des Steuersignals G8 in Figur 3, d.h. in den Zeitintervallen tc, te und tg ist der Schalter 70 leitend geschaltet und während der Zeitintervalle ta, tb, td, tf, th, ti, tj und tk sperrt der Schalter. Wie aus dem Zeitverlauf des Steuersignals G8 hervorgeht, erfolgt wiederum eine Zweipunktsteuerung zum Regeln der vorgegebenen Zwischenkreisspannung UZ2 innerhalb der Zeitintervalle tc bis th.

Je nach Ausführungsform kann der Schalter 60 während der Regelung eingeschaltet oder ausgeschaltet sein, wie in Figur 3 durch den gestrichelt dargestellten Zeitverlauf des Steuersignals G7 angegeben. In dem in Figur 3 dargestellten Beispiel wird die elektrisch schaltbare mechanische Bremse 90 nach dem Zeitintervall th wieder aktiviert, das Steuersignal SBrems_mech springt zu Beginn des Zeitintervalls ti wieder auf high. Dementsprechend endet mit dem Abschluss des Zeitintervalls th die Phase des elektrischen Bremsens gemäß dem erfindungsgemäßen Verfahren unter Regelung auf eine vorgegebene Zwischenkreisspannung UZ2, siehe den Zeitverlauf SBrems_elekt.

Mit Abschluss des Zeitintervalls ti wird der Dreiphasenschalter 10, siehe Figur 1, wieder geschlossen, sodass Netzspannung an der Versorgungsschaltung anliegt und der Zwischenkreis im darauffolgenden Intervall tj wieder über das Netz aufgeladen werden kann. Erst danach, d.h. zu Beginn des Zeitintervalls tk können die Brückenschalter zur Ausführung des Servobetriebs über ihre Steuersignale G1 - G6 wieder zum Halten und Führen des Roboterarms angesteuert werden, und erst dann wird das Steuersignal zur Aktivierung der Bremse SBrems_mech auf low gesetzt. Mit dem Eintritt in den Servobetrieb im Zeitintervall tk kann wiederum eine elektrische Abbremsung der betreffenden Roboterachse erfolgen. Im Unterschied zu der obenbeschriebenen elektrischen Abbremsung in den Zeitintervallen tb - th erfolgt die Abbremsung im Servobetrieb durch entsprechendes Ansteuern der Brückenschalter, die während der Zeitintervalle tb - th permanent sperren.

Zweckmäßigerweise erfolgt die Regelung auf die vorgegebene Zwischenkreisspannung UZ2 solange, bis der Roboter in den Servobetrieb übergeführt werden soll, d.h. bis zum Abschluss des Zeitintervalls ti. Dies hat den Vorteil, dass bei einem Versagen der elektrisch schaltbaren mechanischen Bremse die elektrische Bremswirkung automatisch aktiviert ist und auch beibehalten wird, da die Zwischenkreisspannung durch die Regelung auf einen vorgegebenen Wert beschränkt wird.

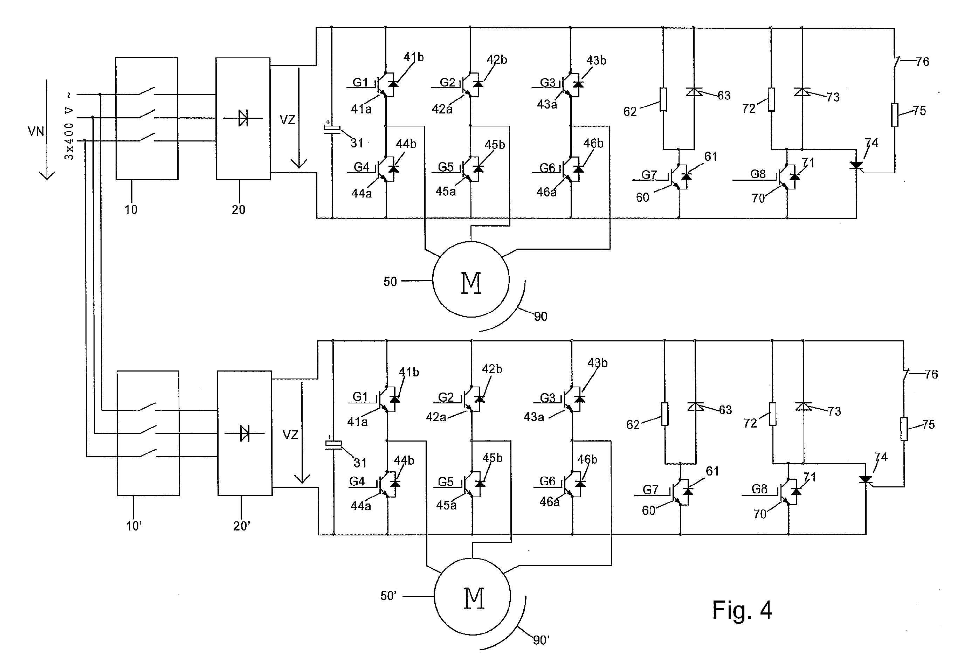

Figur 4 zeigt eine Ausführungsform für einen Roboter mit zwei oder mehr Achsenmotoren, wobei jedem einzelnen Achsenmotor 50, 50' eine eigene Versorgungsschaltung, wie in Figur 1 dargestellt, zugeordnet ist. In der Abbildung sind nur zwei Achsenmotore dargestellt, das Prinzip lässt sich auf eine beliebige Anzahl von Achsenmotoren übertragen. Jedem Achsmotor 50, 50' ist insofern ein Dreiphasenschalter 10, 10' sowie eine Gleichrichterschaltung 20, 20' und eine entsprechende Zwischenkreisschaltung und ein Entladepfad für den Zwischenkreis zugeordnet. Insofern wird eine gegenseitige Beeinflussung der verschiedenen Zwischenkreise vermieden, sodass jede Achse optimiert, insbesondere durch die Festlegung einer zugeordneten vorgegebenen Zwischenkreisspannung, auf die geregelt wird, eingestellt werden kann. Auch die Regelung der jeweiligen Entladepfade erfolgt unabhängig voneinander, kann jedoch durch eine zentrale Steuerung gesteuert werden.

In einer nicht dargestellten Ausführungsform kann im Unterschied zu der in Figur 4 gezeigten vorgesehen sein, die Netzversorgung für die Vielzahl von Gleichrichterschaltungen nur über einen einzelnen Dreiphasenschalter zu schalten. Ansonsten sind wiederum jedem Achsenmotor eine eigene Gleichrichterschaltung, eine eigene Zwischenkreisschaltung und ein eigener Entladepfad für den Zwischenkreis zugeordnet.

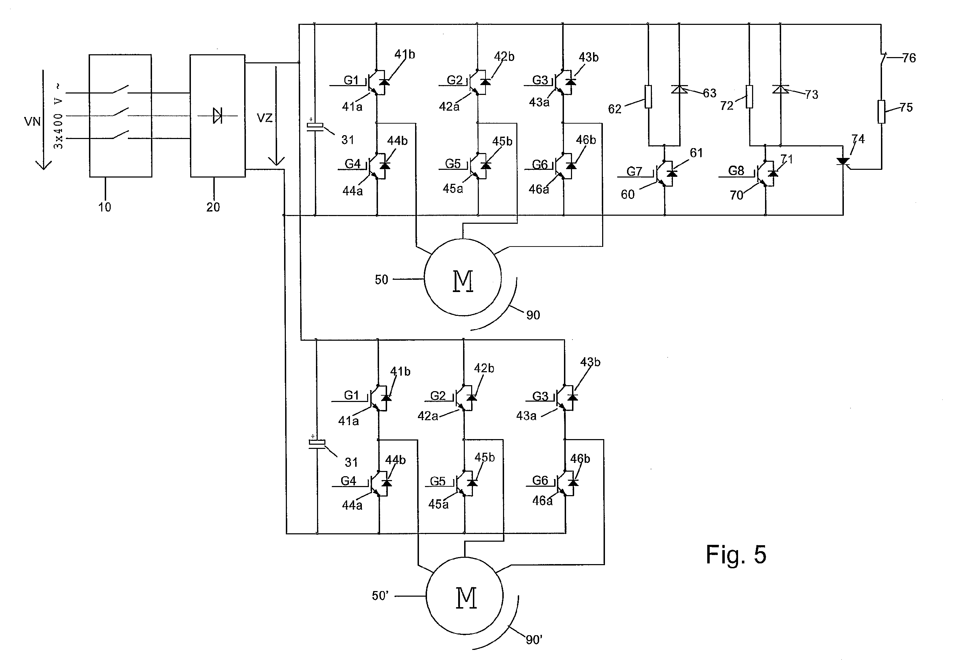

Eine weitere Ausführungsform ist in Figur 5 dargestellt. In dieser Ausführungsform speisen gleichzeitig mehrere Achsenmotoren 50, 50' im generativen Betrieb einen gemeinsamen Zwischenkreis, wobei dieser Zwischenkreis erfindungsgemäß auf eine vorgegebene Zwischenkreisspannung geregelt wird, sodass sich die Achsen gegenseitig beeinflussen, was bei der Wahl der vorbestimmten Zwischenkreisspannung zu berücksichtigen ist, auf die geregelt werden soll. Speisen alle Achsenmotoren den gleichen Zwischenkreis gemäß Figur 5, kann das Verhältnis zwischen Rückspeisestrom des Motors und Strom durch den Bremszweig bzw. Halbleiterschalter 60/70 nicht einzeln beeinflusst werden. Zwar sind in Figur 5 nur zwei Antriebsmotoren dargestellt, das Prinzip lässt sich andererseits für eine beliebige Anzahl von Motoren erweitern, wobei alle Motoren in einem gemeinsamen Zwischenkreis gespeist werden, sodass damit auch nur ein einzelner bzw. in dem beschriebenen Beispiel zwei Entladepfade 62, 60, 72, 70 erforderlich sind. Der Einfachheit halber ist in den Figuren 4, 5 die Steuereinrichtung nicht angegeben, bei der in Figur 5 dargestellten Ausführungsform steuert die Steuereinrichtung die gemeinsame Versorgungsschaltung für die Mehrzahl von Achsmotoren 50, 50'.

### Bezugszeichenliste

- 10, 10': Dreiphasenschalter
- 20, 20': Gleichrichtereinrichtung
- 31: Zwischenkreiskondensator
- 40: Brückenschaltereinrichtung
- 41a - 46a: Halbleiterschalter
- 41b - 46b: Freilaufdiode
- 50, 50': Servomotor/Generator (AC-Motor)
- 60: Halbleiterschalter V7
- 61: Freilaufdiode
- 62: Entladewiderstand R1
- 63: Diode
- 70: Halbleiterschalter V8
- 71: Freilaufdiode
- 72: Entlade-/Regelwiderstand R2
- 73: Diode
- 74: Thyristor
- 75: Widerstand
- 76: Relaisschalter
- 80: Steuereinrichtung/Mikrocontroller/DSP
- 90: Mechanische Bremseinrichtung
- G1 - G8: Steuersignale für die Halbleiterschalter 41a - 46a
- SBrems-mech: Steuersignal für mechanische Bremse
- SBrems-elektr: Anzeigesignal der elektrischen Bremse
- S1: Steuersignal für Steuerschalter
- S2: Steuersignal für Dreiphasenschalter
- VN: Netzspannung
- VZ: Zwischenkreisspannung
- UZ0, UZ1, UZ2: Werte der Zwischenkreisspannung VZ

## Patentansprüche

1. Verfahren zur Steuerung eines motorbetriebenen Industrieroboters, welcher zumindest einen Antriebsmotor (50, 50') umfasst, der von einer an Netzspannung (VN) anschließbaren Versorgungsschaltung gespeist wird, welche zumindest eine mit der Netzspannung verbindbare Gleichrichterschaltung (20, 20'), eine Zwischenkreisschaltung mit zumindest einem Zwischenkreiskondensator (31), sowie eine ausgangsseitig an den Antriebsmotor angeschlossene Brückenschaltereinrichtung (40) umfasst, die eine Wechsel- oder Gleichstromversorgung für den Antriebsmotor bereitstellt, wobei die Versorgungsschaltung des Antriebsmotors durch eine Steuereinrichtung (80) zum Beschleunigen und Abbremsen des Antriebsmotors gesteuert wird, **gekennzeichnet durch** die Schritte zum elektrischen Abbremsen des Antriebsmotors:
- Trennen der Zwischenkreisschaltung vom Netz;
- Regeln der Zwischenkreisspannung (VZ) auf einen vorgegebenen Wert größer Null, wobei der Zwischenkreiskondensator (31) in einem generatorischen Betrieb des Antriebsmotors (50, 50') gespeist wird.

2. Verfahren nach Anspruch 1, **dadurch gekennzeichnet, dass** der Zwischenkreiskondensator (31) nach dem Trennen der Zwischenkreisschaltung vom Netz und vor dem Regeln der Zwischenkreisspannung (VZ) auf eine vorgegebene Zwischenkreisspannung (UZ2) entladen wird.

3. Verfahren nach Anspruch 1 oder 2, **dadurch gekennzeichnet, dass** während des Regelns der Zwischenkreisspannung (VZ) auf einen vorgegebenen Wert (UZ2) die von der Brückenschaltereinrichtung (40) umfassten Schalter (41a -46a) gesperrt gehalten werden.

4. Verfahren nach Anspruch 1, 2 oder 3, **dadurch gekennzeichnet, dass** zum Regeln der Zwischenkreisspannung (VZ) auf einen vorgegebenen Wert (UZ2) ein Entladepfad für den Zwischenkreiskondensator (31) geschaltet wird, welcher zumindest eine Serienschaltung (60, 62; 70, 72) eines Schalters (60; 70)und eines Widerstandes (62; 72) umfasst.

5. Verfahren nach Anspruch 4, **dadurch gekennzeichnet, dass** ein Entladepfad für den Zwischenkreiskondensator (31) geschaltet wird, wenn ein Netzausfall festgestellt wird, wobei der Entladepfad zumindest eine Serienschaltung eines Schalters (74) und eines Widerstandes (72) umfasst.

6. Verfahren nach einem der Ansprüche 1 bis 5, **dadurch gekennzeichnet, dass** das Speisen des Zwischenkreiskondensators (31) in einem generatorischen Betrieb des Antriebsmotors (50) über Freilaufdioden (41b - 46b) in der Brückenschaltereinrichtung durchgeführt wird.

7. Verfahren nach einem der Ansprüche 1 bis 6, **dadurch gekennzeichnet, dass** vor dem elektrischen Abbremsen durch Regeln der Zwischenkreisspannung (VZ) auf einen vorgegebenen Wert (UZ2) größer Null eine mechanische Bremseinrichtung (90) aktiviert und nach einer Abbremsung des Antriebsmotors (50) auf eine vorgegebene Drehzahl wieder geöffnet wird.

8. Verfahren nach einem der Ansprüche 1 bis 7, **dadurch gekennzeichnet, dass** die Regelung der Zwischenkreisspannung (VZ) auf einen vorgegebenen Wert (UZ2) größer Null erst beendet wird, nachdem eine mechanische Bremseinrichtung (90) aktiviert wurde.

9. Verfahren nach einem der Ansprüche 1 bis 8, **dadurch gekennzeichnet, dass** einem Antriebsmotor (50, 50') eine eigene Versorgungsschaltung zugeordnet wird, welche unabhängig von anderen Versorgungsschaltungen für andere Antriebsmotoren (50, 50') zum elektrischen Abbremsen steuerbar ist.

10. Verfahren nach einem der Ansprüche 1 bis 9, **dadurch gekennzeichnet, dass** eine Warneinrichtung zur Abgabe eines optische und/oder akustische Warnsignals eingeschaltet wird, wenn der Zwischenkreiskondensator (31) in einem generatorischen Betrieb des Antriebsmotors (50, 50') gespeist wird und gleichzeitig die Zwischenkreisschaltung vom Netz getrennt ist.

11. Verfahren nach einem der Ansprüche 2 bis 10, **dadurch gekennzeichnet, dass** eine mechanische Bremse (90) erst gelöst wird, nachdem der Zwischenkreiskondensator (31) auf eine vorgegebene Zwischenkreisspannung (UZ2) entladen wurde.

12. Industrieroboter, welcher zumindest einen Antriebsmotor (50, 50') umfasst, der von einer an Netzspannung anschließbaren Versorgungsschaltung gespeist ist, welche zumindest eine mit der Netzspannung (VN) verbindbare Gleichrichterschaltung (20, 20'), eine Zwischenkreisschaltung mit zumindest einem Zwischenkreiskondensator (31), sowie eine ausgangsseitig an den Antriebsmotor (50, 50') angeschlossene Brückenschaltereinrichtung umfasst, die eine Wechselstrom- oder eine Gleichstromversorgung für den Antriebsmotor (50, 50') bereitstellt, wobei die Versorgungsschaltung durch eine Steuereinrichtung (80) zum Beschleunigen und Abbremsen des Antriebsmotors gesteuert ist, **gekennzeichnet durch**
- Mittel zum Trennen der Zwischenkreisschaltung vom Netz; und
- Mittel zum Regeln der Zwischenkreisspannung (VZ) auf einen vorgegebenen Wert (UZ2) größer Null, wobei der Zwischenkreiskondensator (31) in einem generatorischen Betrieb des Antriebsmotors aufladbar ist, so dass der Antriebsmotor elektrisch abbremsbar ist.
